# EUROPEAN PATENT APPLICATION

(11) **EP 4 578 624 A1**
(43) Date of publication of application: **02.07.2025**
(21) Application number: 24210527.8
(22) Date of filing: 04.11.2024
(51) Int. Cl.: B29C 45/26, B29C 33/30, B29C 45/17, B29C 49/06

(54) **POSITIONING JIG AND POSITIONING METHOD**

(30) Priority: 28.12.2023 JP 2023222937
(71) Applicant: Sumitomo Heavy Industries, Ltd., Tokyo 141-6025 (JP)
(72) Inventor: MIYAMA, Toshihide, Chiba, 263-0001, (JP); TAKAHASHI, Rei, Chiba, 263-0001, (JP)
(74) Representative: Louis Pöhlau Lohrentz

(57) **Abstract**

Positioning when assembling a mold unit (10) including an intermediate mold (12) that includes a rotating frame (14) is realized at a low cost as compared with a case where the positioning is performed by measuring a size of an external shape of the mold (12). There is provided a positioning jig (1) that is disposed instead of a rotating frame (14) of an intermediate mold (12), the rotating frame (14) being disposed between a stationary mold (11) and an intermediate die (15) of the intermediate mold (12), in which a through-hole (105) is formed at a position corresponding to a disposition position of a guide pin (142) that is provided on the stationary mold (11) or the rotating frame (14) for positioning between the stationary mold (11) and the rotating frame (14), the through-hole (105) having the same or substantially the same diameter size as a diameter size of the guide pin (142) and having a center axis with the same direction as a direction of a center axis of the guide pin (142), and the through-hole (105) allows a jig pin (2), which slidably penetrates through a guide bush (112) to be fitted with the guide pin (142), to slidably penetrate.

## Description

### BACKGROUND OF THE INVENTION

### Field of the Invention

The present invention relates to a positioning jig and a positioning method.

### Description of Related Art

As a mold unit constituting an injection molding machine, there is a mold unit in which an intermediate mold is disposed between a stationary mold and a movable mold. In addition, as the intermediate mold constituting the mold unit, there is an intermediate mold including a rotating frame that moves while rotating between a position facing the stationary mold and a position facing the movable mold and that alternately performs mold opening and closing operations at each position (for example, Japanese Patent No. 4283181).

### SUMMARY OF THE INVENTION

When the mold unit in which the intermediate mold is disposed between the stationary mold and the movable mold is assembled, the intermediate mold is first aligned and assembled with the stationary mold serving as a reference for positioning. In this case, the positional deviation of the intermediate mold with respect to the stationary mold is measured and adjusted, but the adjustments may sometimes be performed based on a result of measuring a size of each of external shapes of the stationary mold and the intermediate mold. However, in this case, since high precision is required for the sizes of the external shapes of the molds constituting the mold unit, this has been one of the factors causing an increase in cost. Additionally, in a case where the intermediate mold includes the rotating frame, the rotating frame present between the stationary mold and the intermediate mold may sometimes obstruct positioning. To address this, a method of removing the rotating frame is conceivable. However, removing the rotating frame, which is a component of the intermediate mold, makes it difficult to precisely measure the size of the external shape of the intermediate mold.

An object of the present invention is to realize positioning when assembling a mold unit including an intermediate mold that includes a rotating frame at a low cost as compared with a case where the positioning is performed by measuring a size of an external shape of the mold.

The present invention completed under the above-mentioned object relates to a positioning jig that is disposed instead of a rotating frame of an intermediate mold, the rotating frame being disposed between a stationary mold and an intermediate die of the intermediate mold, in which a through-hole is formed at a position corresponding to a disposition position of a guide pin that is provided on the stationary mold or the rotating frame for positioning between the stationary mold and the rotating frame, the through-hole having the same or substantially the same diameter size as a diameter size of the guide pin and having a center axis with the same direction as a direction of a center axis of the guide pin, and the through-hole allows a jig pin, which slidably penetrates through a guide bush to be fitted with the guide pin, to slidably penetrate.

Here, in a correct positioning state, one end of the jig pin, with the other end inserted into the guide bush, may be insertable into the through-hole, and in an incorrect positioning state, the one end of the jig pin, with the other end inserted into the guide bush, may not be insertable into the through-hole.

In addition, in a correct positioning state, among a first jig pin and a second jig pin as two jig pins having the same diameter size, an extension line of a center axis of the first jig pin inserted into the through-hole may coincide with an extension line of a center axis of the second jig pin inserted into the guide bush, and in an incorrect positioning state, the extension line of the center axis of the first jig pin inserted into the through-hole may deviate from the extension line of the center axis of the second jig pin inserted into the guide bush.

Further, the guide pin may be provided on the rotating frame, and the guide bush may be provided in the stationary mold.

Additionally, the present invention relates to a positioning method including: a step of disposing, instead of a rotating frame, a positioning jig in which a through-hole is formed at a position corresponding to a disposition position of a guide pin that is provided on a stationary mold or the rotating frame for positioning between the stationary mold and the rotating frame, the through-hole having the same or substantially the same diameter size as a diameter size of the guide pin and having a center axis with the same direction as a direction of a center axis of the guide pin; and a step of attempting to insert a jig pin, which is slidable with respect to the guide bush to be fitted with the guide pin and the through-hole, into the guide bush and the through-hole.

According to the present invention, the positioning when assembling the mold unit including the intermediate mold that includes the rotating frame can be realized at a low cost as compared with a case where the positioning is performed by measuring a size of an external shape of the mold.

### BRIEF DESCRIPTION OF THE DRAWINGS

Figs. 1A and 1B are schematic views showing a positional relationship between molds constituting a mold unit to which a positioning jig according to the present embodiment is applied.
Figs. 2A and 2B are views showing a state before assembly of a stationary mold and an intermediate mold is started.
Figs. 3A and 3B are diagrams showing a procedure when positioning of the intermediate mold with respect to the stationary mold is performed using the positioning jig according to the present embodiment.
Figs. 4A and 4B are diagrams showing a procedure when the positioning of the intermediate mold with respect to the stationary mold is performed using the positioning jig according to the present embodiment.
Figs. 5A and 5B are diagrams showing a procedure when the positioning of the intermediate mold with respect to the stationary mold is performed using the positioning jig according to the present embodiment.
Figs. 6A and 6B are diagrams showing a procedure when the positioning of the intermediate mold with respect to the stationary mold is performed using the positioning jig according to the present embodiment.
Fig. 7 is a diagram showing a procedure when the positioning of the intermediate mold with respect to the stationary mold is performed using the positioning jig according to the present embodiment.
Figs. 8A and 8B are diagrams showing a procedure when the positioning of the intermediate mold with respect to the stationary mold is performed using the positioning jig according to the present embodiment.

### DETAILED DESCRIPTION OF THE INVENTION

An embodiment of the present invention will be described below in detail with reference to the accompanying drawings.

### Configuration of Mold Unit

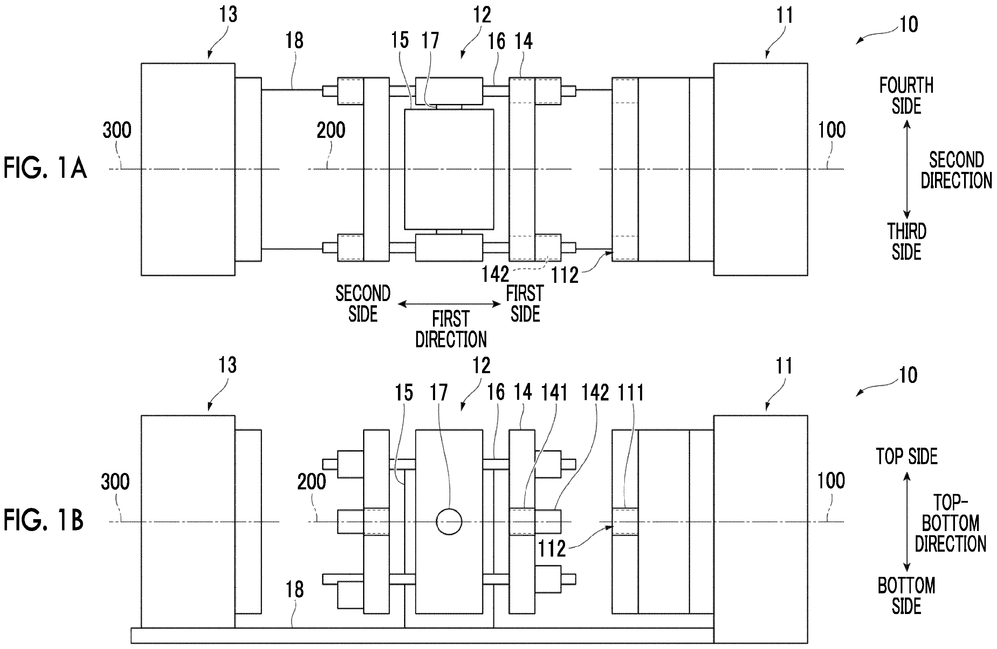

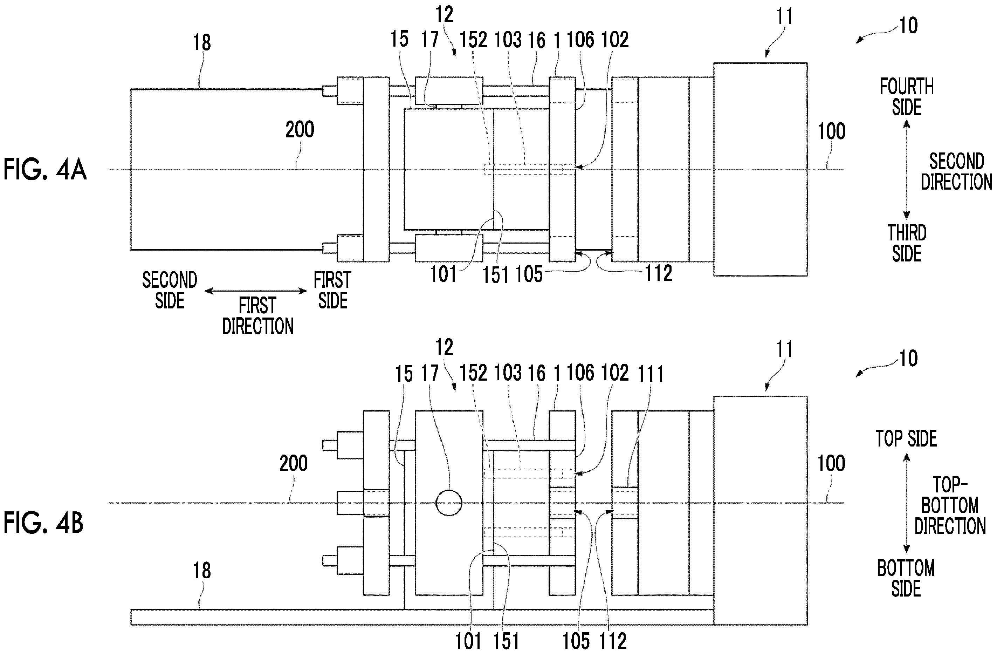

Figs. 1A and 1B are schematic views showing a positional relationship between molds constituting a mold unit 10 to which a positioning jig 1 (refer to Figs. 4A and 4B) according to the present embodiment is applied. Fig. 1A shows a state when the mold unit 10 during assembly is viewed from a top side toward a bottom side in a top-bottom direction. Fig. 1B shows a state when the mold unit 10 during assembly is viewed in a direction perpendicular to the top-bottom direction.

The mold unit 10 shown in Figs. 1A and 1B is a mold unit for performing injection blow molding. The injection blow molding refers to a molding method performed in two stages: injection molding (hereinafter, referred to as "injection molding") and blow molding (hereinafter, referred to as "blow molding"). In the injection blow molding, first, a preform, which is an intermediate molded product, is molded in the injection molding, which is the first-stage molding. Next, in the blow molding, which is the second-stage molding, high-pressure air is blown into an inside of the preform and extended, thereby molding a final molded product.

The mold unit 10 includes a stationary mold 11 for performing injection molding, a movable mold 13 for performing blow molding, and an intermediate mold 12 for performing injection molding and blow molding. The intermediate mold 12 is disposed between the stationary mold 11 and the movable mold 13. The mold unit 10 performs injection molding in a state in which the stationary mold 11 and the intermediate mold 12 are closed, and performs blow molding in a state in which the intermediate mold 12 and the movable mold 13 are closed.

Figs. 1A and 1B show a center line 100 of the stationary mold 11, which serves as a reference for positioning when the mold unit 10 is assembled. The center line 100 of the stationary mold 11 extends in a left-right direction of the drawings, which is a direction in which the mold unit 10 opens and closes. Hereinafter, the direction in which the mold unit 10 opens and closes (the left-right direction of the drawings in Figs. 1A and 1B) will be referred to as a "first direction". Further, a right side of the drawings in the first direction will be referred to as a "first side", and a left side of the drawings in the first direction will be referred to as a "second side".

In addition, among directions perpendicular to the first direction, an up-down direction of the drawing in Fig. 1A will be referred to as a "second direction". Further, a lower side of the drawing in Fig. 1A in the second direction will be referred to as a "third side", and an upper side of the drawing in Fig. 1A in the second direction will be referred to as a "fourth side". Additionally, among directions perpendicular to the first direction, an up-down direction of the drawing in Fig. 1B will be referred to as a "top-bottom direction". Further, an upper side of the drawing in Fig. 1B in the top-bottom direction will be referred to as a "top side", and a lower side of the drawing in Fig. 1B in the top-bottom direction will be referred to as a "bottom side".

The intermediate mold 12 is a mold for performing injection molding and blow molding. The intermediate mold 12 includes a rotating frame 14, an intermediate die 15, a guide bar 16, and a shaft body 17. The rotating frame 14 is a mold that rotates around the shaft body 17 to alternately move between a position facing the stationary mold 11 and a position facing the movable mold 13. The intermediate die 15 is a mold that rotatably supports the rotating frame 14 via the guide bar 16. The guide bar 16 is a columnar member that detachably supports the rotating frame 14 in a state in which a tip part penetrates through the rotating frame 14. The shaft body 17 is a member that serves as a shaft of the rotating frame 14 rotating around the shaft body 17. However, the shaft body 17 itself does not rotate.

A guide pin 142 for positioning with respect to the stationary mold 11 is provided on the rotating frame 14. The guide pin 142 is a columnar member that protrudes toward the first side in the first direction on the rotating frame 14 on each of the third side and the fourth side in the second direction. The guide pin 142 is fixed in a state of being fitted into a through-hole that penetrates through a protrusion 141 provided on the rotating frame 14 having a quadrangular columnar shape. Since the guide pin 142 need only be fixed to the protrusion 141 of the rotating frame 14, the guide pin 142 may be integrally molded with the protrusion 141 as a part of the rotating frame 14.

A guide bush 112 that is a through-hole formed in a cylindrical shape for positioning with respect to the rotating frame 14 is formed in the stationary mold 11 on each of the third side and the fourth side in the second direction. The guide bush 112 is a through-hole that penetrates through a protrusion 111, which is provided on the stationary mold 11 having a quadrangular columnar shape on each of the third side and the fourth side in the second direction, in the first direction. The guide bush 112 is formed to be fitted with the guide pin 142 of the rotating frame 14. That is, the guide bush 112 is formed to have the same diameter size as or a slightly larger diameter size than a diameter size of the guide pin 142.

Since the mold unit 10 shown in Figs. 1A and 1B is in the middle of assembly as described above, the stationary mold 11, the intermediate mold 12, and the movable mold 13 are in a separated state. The assembly of the mold unit 10 is performed in a state in which an extension line of a center line 200 of the intermediate mold 12 and an extension line of a center line 300 of the movable mold 13 coincide with an extension line of the center line 100 of the stationary mold 11, which serves as a reference for positioning.

Specifically, as shown in Fig. 1B, the intermediate mold 12 and the movable mold 13 are installed in this order at an interval on the second side in the first direction with respect to the stationary mold 11, which serves as a reference for positioning. A movement enabling member 18 made of a so-called linear guide, a slide rail, or the like is installed in advance at an installation location of the intermediate mold 12 and the movable mold 13 to enable each of the intermediate mold 12 and the movable mold 13 to move in the first direction.

First, a worker performs the positioning of the intermediate mold 12 with respect to the stationary mold 11 and assembles the stationary mold 11 and the intermediate mold 12. Next, the worker performs the positioning of the movable mold 13 with respect to the intermediate mold 12 and assembles the intermediate mold 12 and the movable mold 13. Here, the adjustment of the positioning of the intermediate mold 12 with respect to the stationary mold 11 is performed by disposing a position adjustment member such as a shim (not shown) between the intermediate mold 12 and the movement enabling member 18. Similarly, the adjustment of the positioning of the movable mold 13 with respect to the intermediate mold 12 is also performed by disposing the position adjustment member between the movable mold 13 and the movement enabling member 18. In this way, the mold unit 10 is assembled.

Figs. 1A and 1B show a state in which the extension line of the center line 200 of the intermediate mold 12 and the extension line of the center line 300 of the movable mold 13 coincide with the extension line of the center line 100 of the stationary mold 11. That is, Figs. 1A and 1B show a state of the mold unit 10 after the positioning of the intermediate mold 12 with respect to the stationary mold 11 and the positioning of the movable mold 13 with respect to the intermediate mold 12 have been performed.

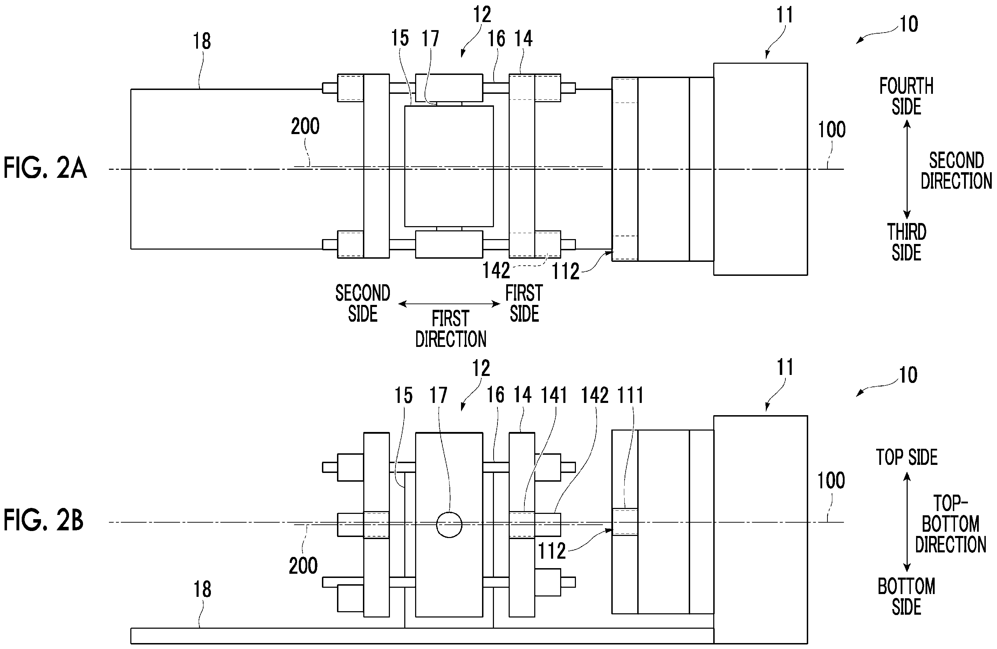

Figs. 2A and 2B are views showing a state before the assembly of the stationary mold 11 and the intermediate mold 12 is started. Fig. 2A shows a state when the stationary mold 11 and the intermediate mold 12 are viewed from the top side toward the bottom side in the top-bottom direction. Fig. 2B shows a state when the stationary mold 11 and the intermediate mold 12 are viewed in a direction perpendicular to the top-bottom direction.

As described above, first, the assembly of the mold unit 10 is started from the positioning of the intermediate mold 12 with respect to the stationary mold 11. Figs. 2A and 2B show a state in which the intermediate mold 12 is installed on the second side in the first direction with respect to the stationary mold 11 in order to perform the positioning of the intermediate mold 12 with respect to the stationary mold 11.

In the state shown in Figs. 2A and 2B, the extension line of the center line 200 of the intermediate mold 12 does not coincide with the extension line of the center line 100 of the stationary mold 11. Specifically, as shown in Fig. 2A, the extension line of the center line 200 of the intermediate mold 12 slightly deviates to the fourth side in the second direction with respect to the extension line of the center line 100 of the stationary mold 11. Further, as shown in Fig. 2B, the extension line of the center line 200 of the intermediate mold 12 slightly deviates to the bottom side in the top-bottom direction with respect to the extension line of the center line 100 of the stationary mold 11.

When the intermediate mold 12 is assembled with the center line 200 deviating from the center line 100 of the stationary mold 11, the guide pin 142 of the rotating frame 14 and the guide bush 112 of the stationary mold 11 are not properly fitted to each other, thereby leading to interference and potential damage. Therefore, in the present embodiment, the positioning of the intermediate mold 12 with respect to the stationary mold 11 is performed using the following method.

### Positioning Procedure

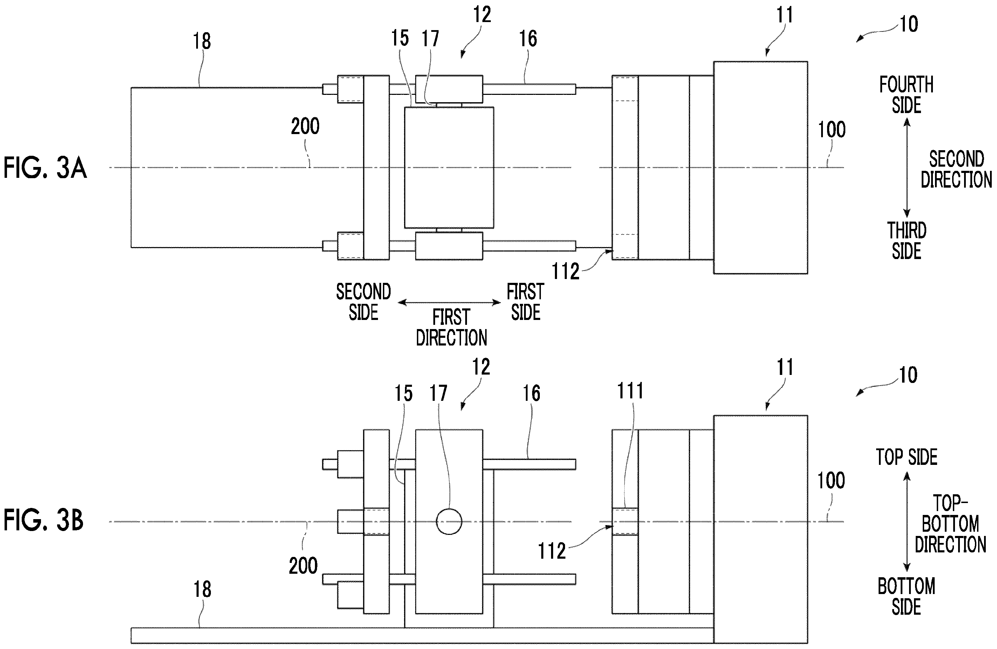

Figs. 3A to 8B are diagrams showing a procedure when the positioning of the intermediate mold 12 with respect to the stationary mold 11 is performed using the positioning jig 1 according to the present embodiment. Figs. 3A to 5B show examples in a case where the center line 100 of the stationary mold 11 and the center line 200 of the intermediate mold 12 do not deviate from each other. In addition, Figs. 3A, 4A, and 5A show a state when the stationary mold 11 and the intermediate mold 12 are viewed from the top side toward the bottom side in the top-bottom direction. Further, Figs. 3B, 4B, and 5B show a state when the stationary mold 11 and the intermediate mold 12 are viewed in a direction perpendicular to the top-bottom direction.

When the worker performs the positioning of the intermediate mold 12 with respect to the stationary mold 11 by using the positioning jig 1 (refer to Figs. 4A and 4B) according to the present embodiment, the worker first removes the rotating frame 14 from the intermediate mold 12. Specifically, as shown in Figs. 1A and 1B described above, since the rotating frame 14 is detachably attached to a tip portion of the guide bar 16 of the intermediate mold 12, the worker removes the rotating frame 14 from the tip portion of the guide bar 16. Figs. 3A and 3B show a state after the rotating frame 14 has been removed from the guide bar 16 of the intermediate mold 12.

The worker attaches the positioning jig 1 to the intermediate mold 12 with the rotating frame 14 removed therefrom. The positioning jig 1 is a jig in which two metal members having quadrangular columnar shapes are each disposed on the first side and the second side in the first direction, and the members are joined in the first direction or are integrally molded. The member disposed on the first side in the first direction has a longer length in the second direction than a length of the member disposed on the second side. The positioning jig 1 is formed with a through-hole 102 through which a bolt 103 for fixing the positioning jig 1 to the intermediate die 15 passes. In the positioning jig 1, a position where the through-hole 102 through which the bolt 103 passes is formed is not particularly limited and need only be any position where the positioning jig 1 can be stably fixed to the intermediate die 15. In the present embodiment, as shown in Figs. 4A and 4B, the through-hole 102 through which the bolt 103 passes is formed at two locations, on the top side and the bottom side in the top-bottom direction, near the central part of the positioning jig 1 in the second direction.

The worker inserts the bolt 103 including a male thread at a tip portion into the through-hole 102 in a state in which a surface 101 of the positioning jig 1 on the second side in the first direction faces a surface 151 of the intermediate die 15 on the first side in the first direction, and screws the bolt 103 into a female thread of a bolt hole 152 provided in the intermediate die 15 in advance. Consequently, the positioning jig 1 is attached to the intermediate die 15 of the intermediate mold 12. Figs. 4A and 4B show a state when the positioning jig 1 is attached to the intermediate die 15 of the intermediate mold 12.

Although not shown, a diameter of an inlet portion (a portion of the positioning jig 1 on the first side in the first direction) of the through-hole 102 is larger than a diameter of a head portion of the bolt 103. In addition, a diameter of an outlet portion (a portion of the positioning jig 1 on the second side in the first direction) of the through-hole 102 is smaller than the diameter of the head portion of the bolt 103 and larger than a diameter of a shaft portion of the bolt 103. Therefore, in a state in which the positioning jig 1 is attached to the intermediate mold 12 by using the bolt 103, the head portion of the bolt 103 does not protrude toward the first side from a surface 106 of the positioning jig 1 on the first side in the first direction.

The positioning jig 1 is formed with a through-hole 105 for positioning with respect to the stationary mold 11. The position where the through-hole 105 is formed in the positioning jig 1 is extremely limited in order to precisely perform the positioning. Specifically, the through-hole 105 is formed at a position strictly corresponding to a disposition position of the guide pin 142 of the rotating frame 14 (refer to Figs. 1A and 1B). Here, "corresponding" means that the position of the guide pin 142 in the rotating frame 14 attached to the intermediate die 15 with respect to the guide bush 112 and the position of the through-hole 105 in the positioning jig 1 attached to the intermediate die 15 instead of the rotating frame 14 with respect to the guide bush 112 coincide with each other.

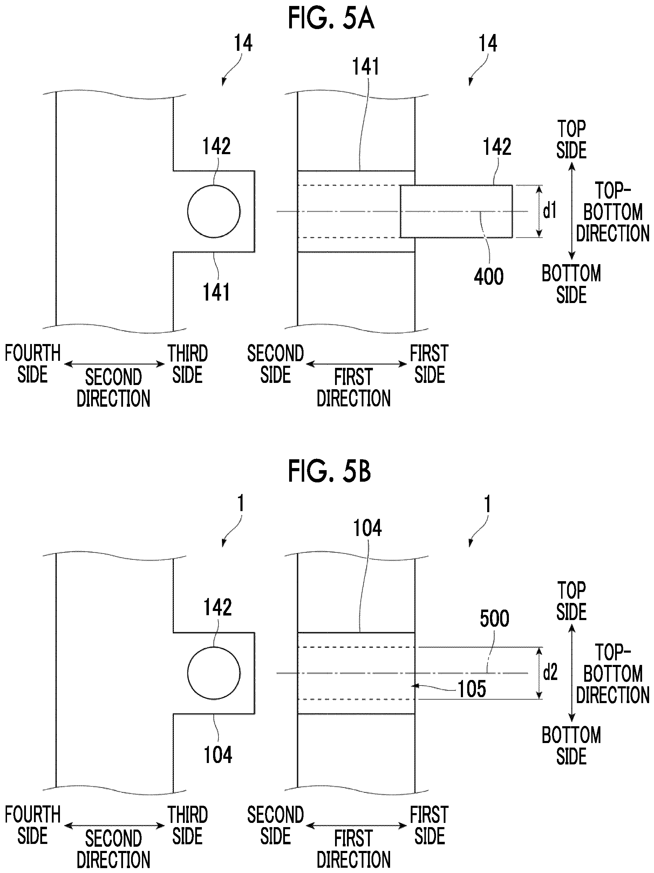

Fig. 5A shows an example of a configuration of the guide pin 142 provided on the rotating frame 14. Fig. 5B shows an example of a configuration of the through-hole 105 provided in the positioning jig 1. The through-hole 105 provided in the positioning jig 1 is a through-hole that penetrates through a protrusion 104, which is formed on the positioning jig 1 on each of the third side and the fourth side in the second direction, in the first direction. Fig. 5B shows the through-hole 105 that penetrates through the protrusion 104 provided on the positioning jig 1 on the third side in the second direction.

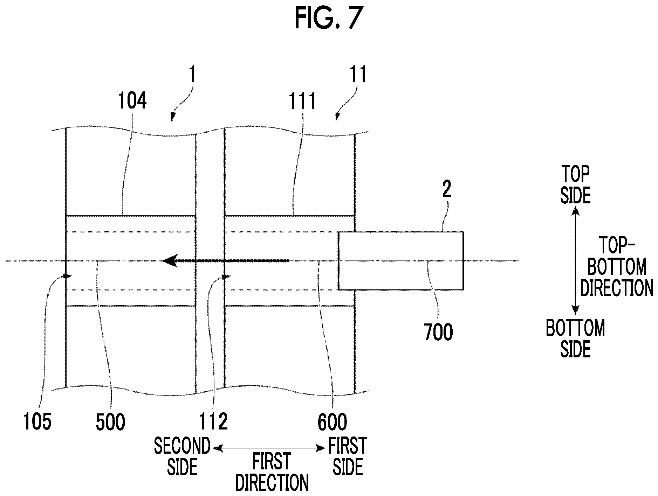

The through-hole 105 of the positioning jig 1 is designed such that a diameter size d2 thereof is the same or substantially the same as a diameter size d1 of the guide pin 142 (refer to Fig. 5A). Therefore, the through-hole 105 allows a jig pin 2 for positioning work (refer to Fig. 7), which will be described below, to slidably penetrate. Additionally, the positioning jig 1 is designed such that a center axis 400 of the guide pin 142 in a state in which the rotating frame 14 is attached to the intermediate mold 12 and a center axis 500 of the through-hole 105 in a state in which the positioning jig 1 is attached to the intermediate mold 12 instead of the rotating frame 14 coincide with each other.

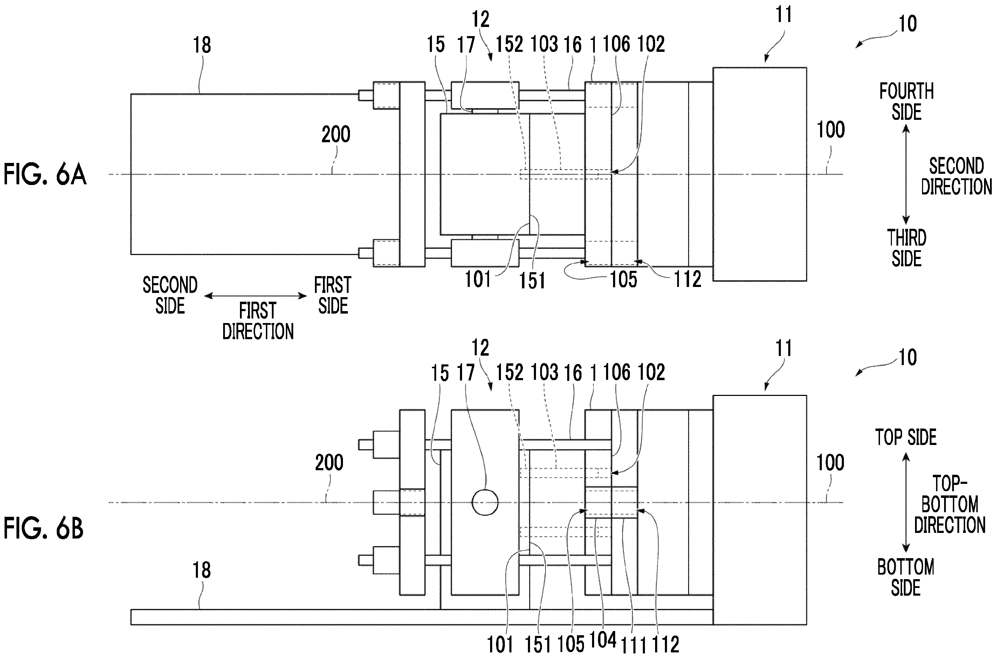

When attaching the positioning jig 1 with respect to the intermediate mold 12, the worker brings the intermediate mold 12 with the positioning jig 1 attached thereto close to the stationary mold 11. Specifically, the intermediate mold 12 with the positioning jig 1 attached thereto is moved toward the first side from the second side in the first direction to approach the stationary mold 11. Figs. 6A and 6B show a state when the intermediate mold 12 is brought close to the stationary mold 11.

When the intermediate mold 12 is brought close to the stationary mold 11, as shown in Fig. 7, a gap is formed between the through-hole 105 of the positioning jig 1 and the guide bush 112 of the stationary mold 11. The worker inserts the jig pin 2 into the guide bush 112 of the stationary mold 11 from the first side toward the second side in the first direction. The jig pin 2 is a columnar jig whose center axis 700 is a straight line and which is separately manufactured to have the same or substantially the same diameter size as the diameter size of the guide pin 142 of the rotating frame 14 (refer to Figs. 1A and 1B). The jig pin 2 is fitted into the guide bush 112 of the stationary mold 11 and can penetrate and pass while sliding through the guide bush 112 as it is.

The worker further moves the jig pin 2 that has passed through the guide bush 112 of the stationary mold 11 in the first direction and attempts to fit the jig pin 2 into the through-hole 105 of the positioning jig 1 as it is. That is, the worker attempts to fit one end of the single jig pin 2 into the through-hole 105 of the positioning jig 1 in a state in which the other end is fitted into the guide bush 112 of the stationary mold 11.

In a case where the positioning of the intermediate mold 12 with respect to the stationary mold 11 is in a correct state, an extension line of the center axis 700 of the jig pin 2 and an extension line of the center axis 500 of the through-hole 105 coincide with each other. In this case, the worker can fit the one end of the single jig pin 2 into the through-hole 105 of the positioning jig 1 in a state in which the other end is fitted into the guide bush 112 of the stationary mold 11.

On the other hand, in a case where the positioning of the intermediate mold 12 with respect to the stationary mold 11 is not in a correct state, the extension line of the center axis 700 of the jig pin 2 and the extension line of the center axis 500 of the through-hole 105 do not coincide with each other. In this case, the one end of the single jig pin 2 cannot be fitted into the through-hole 105 of the positioning jig 1 in a state in which the other end is fitted into the guide bush 112 of the stationary mold 11.

In a case where the positioning of the intermediate mold 12 with respect to the stationary mold 11 is not in a correct state, the worker performs a work of adjusting the position of the intermediate mold 12 with respect to the stationary mold 11. Specifically, first, the worker moves the intermediate mold 12, which is close to the stationary mold 11, toward the second side in the first direction to separate the stationary mold 11 and the intermediate mold 12 from each other, thereby forming a working space of several centimeters to several tens of centimeters between the stationary mold 11 and the intermediate mold 12.

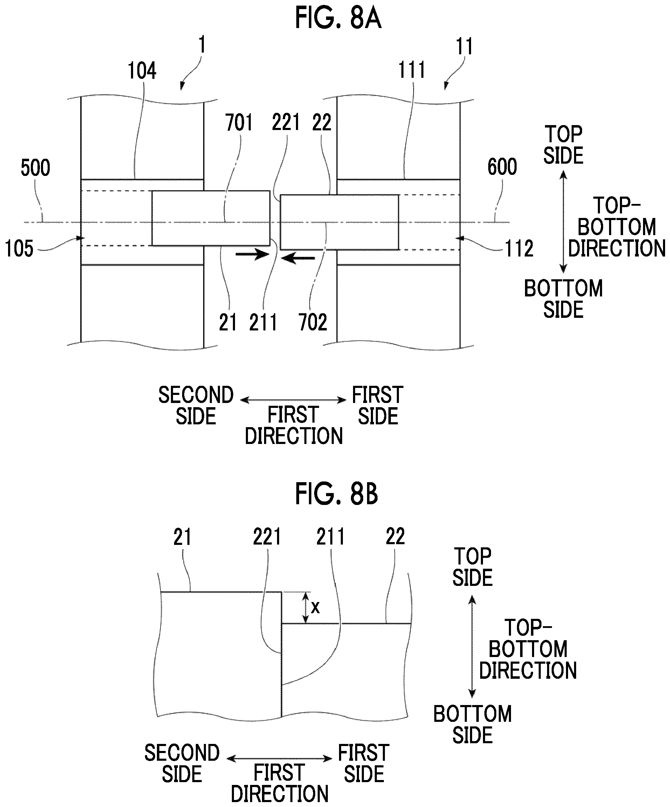

Next, as shown in Fig. 8A, the worker inserts a jig pin 21 into the through-hole 105 of the positioning jig 1 and inserts a jig pin 22 into the guide bush 112 of the stationary mold 11. In this case, the jig pins 21 and 22 may be inserted from the first side toward the second side in the first direction or may be inserted from the second side toward the first side in the first direction. Then, the worker slides the jig pin 21 to the first side in the first direction with respect to the through-hole 105 and slides the jig pin 22 to the second side in the first direction with respect to the guide bush 112, thereby bringing the jig pin 21 and the jig pin 22 into contact with each other. Fig. 8A shows a state immediately before the jig pin 21 and the jig pin 22 come into contact with each other.

The worker brings a surface 211 of an end portion of the jig pin 21 on the first side in the first direction and a surface 221 of an end portion of the jig pin 22 on the second side in the first direction into contact with each other. Then, the worker uses a measuring device such as a dial gauge to measure an amount of deviation between the center axes at a contact portion between the jig pin 21 and the jig pin 22. Specifically, as shown in Fig. 8B, an amount of positional deviation between a center axis 701 of the jig pin 21 and a center axis 702 of the jig pin 22 is measured. Consequently, the worker can quantitatively identify a direction and degree of positional deviation of the intermediate mold 12 with respect to the stationary mold 11. The positional deviation may occur not only in the top-bottom direction and the second direction, but also at any angle of 360°. Fig. 8B shows an amount of deviation x in the top-bottom direction.

The worker adjusts the disposition position or the number of the position adjustment members disposed between the intermediate mold 12 and the movement enabling member 18 based on the direction and degree of positional deviation quantitatively identified. Consequently, the positional deviation of the intermediate mold 12 with respect to the stationary mold 11 is corrected. The worker repeatedly performs a work of bringing the jig pin 21 and the jig pin 22 into contact with each other and measuring positional deviation, and a work of adjusting the disposition position or the number of the position adjustment members, thereby positioning the intermediate mold 12 with respect to the stationary mold 11. As a result, the stationary mold 11 and the intermediate mold 12 can be assembled in a state in which the positioning of the intermediate mold 12 with respect to the stationary mold 11 is correct.

When the positioning of the intermediate mold 12 with respect to the stationary mold 11 is completed, the worker performs the positioning of the movable mold 13 (refer to Figs. 1A and 1B) with respect to the intermediate mold 12. The same method as that in the positioning of the intermediate mold 12 with respect to the stationary mold 11 can be used for the positioning of the movable mold 13 with respect to the intermediate mold 12. That is, although not shown, the positioning jig 1 according to the present embodiment is disposed between the intermediate mold 12 with the rotating frame 14 removed therefrom and the movable mold 13, and the positioning is performed using one or a plurality of jig pins 2. Consequently, the intermediate mold 12 and the movable mold 13 can be assembled in a state in which the positioning of the movable mold 13 with respect to the intermediate mold 12 is correct. As a result, the mold unit can be assembled in a state in which the extension lines of the center lines of the stationary mold 11, the intermediate mold 12, and the movable mold 13 coincide with each other.

In summary, the positioning jig to which the present invention is applied need only have the following configuration and can take various embodiments.

That is, the positioning jig 1 according to the present embodiment is a positioning jig that is disposed instead of the rotating frame 14 of the intermediate mold 12, the rotating frame 14 being disposed between the stationary mold 11 and the intermediate die 15 of the intermediate mold 12, in which the through-hole 105 is formed at a position corresponding to the disposition position of the guide pin 142 that is provided on the stationary mold 11 or the rotating frame 14 for positioning between the stationary mold 11 and the rotating frame 14, the through-hole 105 having the same or substantially the same diameter size as the diameter size of the guide pin 142 and having the center axis with the same direction as the direction of the center axis of the guide pin 142, and the through-hole 105 allows the jig pin 2, which slidably penetrates through the guide bush 112 to be fitted with the guide pin 142, to slidably penetrate.

Consequently, the through-hole 105 formed in the positioning jig 1 is disposed at a position corresponding to the disposition position of the guide pin 142 and enables the jig pin 2 that slidably penetrates through the guide bush 112 to slide. As a result, the worker can confirm the presence or absence of the positional deviation of the intermediate mold 12 with respect to the stationary mold 11 by attempting to fit one end of the single jig pin 2 into the through-hole 105 in a state in which the other end is fitted into the guide bush 112. In addition, the worker inserts the jig pin 21 and the jig pin 22 into the through-hole 105 and the guide bush 112, respectively, and measures the magnitude of the positional deviation by bringing the jig pin 21 and the jig pin 22 into contact with each other, so that it is possible to quantitatively identify the magnitude of the positional deviation of the intermediate mold 12 with respect to the stationary mold 11. Further, it is also possible to measure the parallelism between the stationary mold 11 and the intermediate mold 12.

Here, in a state in which the positioning between the stationary mold 11 and the rotating frame 14 is correct, one end of the jig pin 2, with the other end inserted into the guide bush 112, may be insertable into the through-hole 105, and in a state in which the positioning between the stationary mold 11 and the rotating frame 14 is incorrect, the one end of the jig pin 2, with the other end inserted into the guide bush 112, may not be insertable into the through-hole 105.

Consequently, the worker can easily determine that the positioning is in a correct state when the one end of the single jig pin 2 can be fitted into the through-hole 105 in a state in which the other end is fitted into the guide bush 112, and that the positioning is not in a correct state when the one end of the single jig pin 2 cannot be fitted into the through-hole 105.

Additionally, in a state in which the positioning between the stationary mold 11 and the rotating frame 14 is correct, among the jig pin 21, which is the first jig pin, and the jig pin 22, which is the second jig pin, as two jig pins 2 having the same diameter size, the extension line of the center axis 701 of the jig pin 21 inserted into the through-hole 105 may coincide with the extension line of the center axis 702 of the jig pin 22 inserted into the guide bush 112, and in a state in which the positioning between the stationary mold 11 and the rotating frame 14 is incorrect, the extension line of the center axis 701 of the jig pin 21 inserted into the through-hole 105 may deviate from the extension line of the center axis 702 of the jig pin 22 inserted into the guide bush 112.

Consequently, the worker inserts the jig pin 21 and the jig pin 22 into the through-hole 105 and the guide bush 112, respectively, and measures the magnitude of the positional deviation by bringing the jig pin 21 and the jig pin 22 into contact with each other, so that it is possible to quantitatively identify the magnitude of the positional deviation of the intermediate mold 12 with respect to the stationary mold 11.

In addition, the guide pin 142 may be provided on the rotating frame 14, and the guide bush 112 may be provided in the stationary mold 11.

Consequently, the through-hole 105 of the positioning jig 1 disposed instead of the rotating frame 14 of the intermediate mold 12 is disposed at a position corresponding to the disposition position of the guide pin 142 of the rotating frame 14 and enables the jig pin 2 that slidably penetrates through the guide bush 112 of the stationary mold 11 to slide. As a result, the worker can confirm the presence or absence of the positional deviation by attempting to fit one end of the single jig pin 2 into the through-hole 105 in a state in which the other end is fitted into the guide bush 112. Further, the worker inserts the jig pin 21 and the jig pin 22 into the through-hole 105 and the guide bush 112, respectively, and measures the magnitude of the positional deviation by bringing the jig pin 21 and the jig pin 22 into contact with each other, so that it is possible to quantitatively identify the magnitude of the positional deviation of the intermediate mold 12 with respect to the stationary mold 11.

Additionally, the positioning method to which the present invention is applied need only have the following configuration and can take various embodiments.

That is, the positioning method according to the present embodiment is a positioning method including: a step of disposing, instead of the rotating frame 14, the positioning jig 1 in which the through-hole 105 is formed at a position corresponding to the disposition position of the guide pin 142 that is provided on the stationary mold 11 or the rotating frame 14 for positioning between the stationary mold 11 and the rotating frame 14, the through-hole 105 having the same or substantially the same diameter size as the diameter size of the guide pin 142 and having the center axis with the same direction as the direction of the center axis of the guide pin 142; and a step of attempting to insert one or a plurality of jig pins, which are slidable with respect to each of the guide bush 112 to be fitted with the guide pin 142 and the through-hole 105, into the guide bush 112 and the through-hole 105.

As a result, the worker can confirm the presence or absence of the positional deviation by attempting to fit one end of the single jig pin 2 into the through-hole 105 in a state in which the other end is fitted into the guide bush 112. Additionally, the worker inserts the jig pin 21 and the jig pin 22 into the through-hole 105 and the guide bush 112, respectively, and measures the magnitude of the positional deviation by bringing the jig pin 21 and the jig pin 22 into contact with each other, so that it is possible to quantitatively identify the magnitude of the positional deviation of the intermediate mold 12 with respect to the stationary mold 11. Moreover, it is also possible to measure the parallelism between the stationary mold 11 and the intermediate mold 12.

### Others

Although the embodiment of the present invention has been described above, the present invention is not limited to the above-described embodiment. In addition, the effects of the present invention are not limited to those described in the above-described embodiment. For example, the configurations of the positioning jig 1 shown in Figs. 4A and 4B are merely examples for achieving the object of the present invention and are not particularly limited.

For example, in the above-described embodiment, the guide pin 142 is provided on the rotating frame 14 of the intermediate mold 12, and the guide bush 112 is provided in the stationary mold 11, but the present invention is not limited thereto. The guide pin 142 may be provided on the stationary mold 11, and the guide bush 112 may be provided in the rotating frame 14. That is, the positional relationship between the guide pin 142 and the guide bush 112 that are in a fitting relationship may be reversed. However, in a case where the positional relationship between the guide pin 142 and the guide bush 112 is reversed, the positioning jig 1 is attached instead of a mold member (for example, a cavity plate) including the guide pin 142 in the stationary mold 11.

In addition, in the above-described embodiment, the operation of inserting the jig pin 2 into the through-hole 105 of the positioning jig 1 and the guide bush 112 of the stationary mold 11 is manually performed by the worker, but the operation may be automatically performed.

Further, in the above-described embodiment, the configuration has been employed in which the positioning jig 1 is fixed to the intermediate die 15 by passing only the bolt 103 through the through-hole 102 of the positioning jig 1, but the present invention is not limited thereto. For example, a configuration may be employed in which the positioning jig 1 is fixed to the intermediate die 15 by using a spacer block and a bolt (not shown). Consequently, it is possible to reduce a risk of damage or the like that may occur when the stationary mold 11 and the rotating frame 14 come into contact with each other, as compared with a case where the positioning jig 1 is fixed to the intermediate die 15 using only the bolt 103.

### Brief Description of the Reference Symbols

1: positioning jig
2, 21, 22: jig pin
10: mold unit
11: stationary mold
12: intermediate mold
13: movable mold
14: rotating frame
15: intermediate die
16: guide bar
17: shaft body
18: movement enabling member
105: through-hole
112: guide bush
142: guide pin

## Claims

1. A positioning jig (1) that is disposed instead of a rotating frame (14) of an intermediate mold (12), the rotating frame (14) being disposed between a stationary mold (11) and an intermediate die (15) of the intermediate mold (12),
wherein a through-hole (105) is formed at a position corresponding to a disposition position of a guide pin (142) that is provided on the stationary mold (11) or the rotating frame (14) for positioning between the stationary mold (11) and the rotating frame (14), the through-hole (105) having the same or substantially the same diameter size as a diameter size of the guide pin (142) and having a center axis with the same direction as a direction of a center axis of the guide pin (142), and
the through-hole (105) allows a jig pin (2), which slidably penetrates through a guide bush (112) to be fitted with the guide pin (142), to slidably penetrate.

2. The positioning jig (1) according to claim 1,
wherein, in a correct positioning state, one end of the jig pin (2), with the other end inserted into the guide bush (112), is insertable into the through-hole (105), and in an incorrect positioning state, the one end of the jig pin (2), with the other end inserted into the guide bush (112), is not insertable into the through-hole (105).

3. The positioning jig (1) according to claim 1,
wherein, in a correct positioning state, among a first jig pin (21) and a second jig pin (22) as two jig pins (2) having the same diameter size, an extension line of a center axis (701) of the first jig pin (21) inserted into the through-hole (105) coincides with an extension line of a center axis (702) of the second jig pin (22) inserted into the guide bush (112), and in an incorrect positioning state, the extension line of the center axis (701) of the first jig pin (21) inserted into the through-hole (105) deviates from the extension line of the center axis (702) of the second jig pin (22) inserted into the guide bush (112) .

4. The positioning jig (1) according to claim 2,
wherein the guide pin (142) is provided on the rotating frame (14), and the guide bush (112) is provided in the stationary mold (11).

5. A positioning method comprising:
a step of disposing, instead of a rotating frame (14), a positioning jig (1) in which a through-hole (105) is formed at a position corresponding to a disposition position of a guide pin (142) that is provided on a stationary mold (11) or the rotating frame (14) for positioning between the stationary mold (11) and the rotating frame (14), the through-hole (105) having the same or substantially the same diameter size as a diameter size of the guide pin (142) and having a center axis with the same direction as a direction of a center axis of the guide pin (142); and
a step of attempting to insert one or a plurality of jig pins (2, 21, 22), which are slidable with respect to each of the guide bush (112) to be fitted with the guide pin (142) and the through-hole (105), into the guide bush (112) and the through-hole (105).
